# EUROPÄISCHE PATENTSCHRIFT

(11) **EP 2 058 911 B1**
(45) Veröffentlichungstag und Bekanntmachung des Hinweises auf die Patenterteilung: **02.12.2009**
(21) Anmeldenummer: 08019242.0
(22) Anmeldetag: 03.11.2008
(51) Int. Cl.: H02G 3/04

(54) **Medizinische Versorgungseinheit zur Stromversorgung und Datenübertragung bei medizinischen Apparaten**
Medical supply unit for supplying electricity and transferring data in medical devices
Unité d'alimentation médicale destinée à l'alimentation en courant et la transmission de données pour des appareils médicaux

(30) Priorität: 08.11.2007 DE 102007053327
(43) Veröffentlichungstag der Anmeldung: 13.05.2009
(73) Patentinhaber: TRUMPF Medizin Systeme GmbH + Co. KG, 82178 Pucheim (DE)
(72) Erfinder: Bauer, Georg, 85221 Dachau (DE); Brunner, Jürgen, 82335 Berg (DE); Holz, Eberhard, 72076 Tübingen (DE); Weisheit, Thomas, 80995 München (DE)
(74) Vertreter: Prüfer & Partner GbR European Patent Attorneys

(56) Entgegenhaltungen:
- WO-A-99/50587
- DE-C1- 4 239 625
- DE-U1- 29 505 072

## Beschreibung

Die Erfindung betrifft eine medizinische Versorgungseinheit zur Stromversorgung und Datenübertragung bei medizinischen Geräten. Insbesondere betrifft die Erfindung eine medizinische Versorgungseinheit, in dem Stromverbraucher und Datenübermittlungsgeräte entlang einer Kopplungsvorrichtung stufenlos verschiebbar sind.

Im medizinischen Bereich, insbesondere in der Intensivmedizin oder in der Chirurgie ist es erforderlich, eine Vielzahl elektrischer und elektronischer medizinischer Apparate auf engem Raum zu betreiben und so anzuordnen, dass sie sich einerseits nahe am Patienten befinden, aber andererseits den Zugang zum Patienten nicht behindern. Dies erfordert idR., dass derartige Apparate in gewissem Umfang mobil sind. Dies stellt vergleichbare Anforderungen an die Stromversorgung und gegebenenfalls an Datenübertragungsanschlüsse für diese medizinischen Apparate.

Aus dem Stand der Technik sind mobile Trägervorrichtungen für medizinische Apparate bekannt, die eine Kopplungsvorrichtung aufweisen, an der medizinische Apparate zur Stromversorgung und zur Datenübertragung angeschlossen werden können. So zeigt beispielsweise die Druckschrift DE 42 396 25 C1 eine mobile Trägervorrichtung für medizinische Apparate, die eine Kupplungseinrichtung zur Stromversorgung der medizinischen Apparate und zum Datenaustausch aufweist, wobei bei dieser Vorrichtung ein langgestreckter Träger vorgesehen ist, an dessen Außenseiten sich zwei elektrisch voneinander isolierte Leiterschienen befinden, die durchgehend entlang der Längserstreckung des Trägers verlaufen. An diesem Träger ist eine Klemmeinrichtung ansetzbar und kann an der Kopplungsvorrichtung stufenlos verschoben werde, um das medizinische Gerät in einer beliebigen Position entlang des Trägers anzuordnen, mit Strom zu versorgen und eine Datenübertragung zu ermöglichen.

Diese Vorrichtung weist aber den Nachteil auf, dass bei unachtsamer Handhabung, beispielsweise durch Anfassen eine Verbindung zwischen den beiden Leiterschienen hergestellt werden kann. Daher kann damit nur eine Stromversorgung mit niedrigen elektrischen Spannungen bereitgestellt werden, wenn nicht weitere Sicherungsmechanismen vorgesehen werden. Darüber hinaus ist die in dem Stand der Technik vorgesehene Klemmeinrichtung nur auf die Herstellung eines elektrischen Kontakts eines medizinischen Apparats mit der Stromversorgung an der Trägervorrichtung ausgelegt. Die Klemmeinrichtung selbst bietet keine Möglichkeit, einer größeren Belastung wie beispielsweise dem Gewicht eines medizinischen Apparats standzuhalten und diesen ortsfest zu fixieren.

Es ist Aufgabe der Erfindung, diese Probleme zu lösen. Insbesondere ist es Aufgabe der Erfindung eine Vorrichtung bereitzustellen, die es ermöglicht, unter Beibehaltung einer Mobilität auch größere medizinische Geräte und Verbraucher flexibel mit elektrischem Strom zu versorgen oder anzubringen, die eine Niederspannungsstromversorgung benötigen als auch eine stärkere Befestigung an dem Träger benötigen.

Diese Aufgabe wird durch die Vorrichtungen nach den Ansprüchen 1, 13 und 24 gelöst. Vorteilhafte Weiterentwicklungen sind Gegenstand der Unteransprüche.

Gemäß einem Aspekt der Erfindung wird eine medizinische Versorgungseinheit für den medizinischen Bereich offenbart, die einen langgestreckten Träger aufweist, wobei die medizinische Versorgungseinheit eine Kopplungseinrichtung aufweist und die Kopplungseinrichtung sich entlang des Trägers erstreckt und mindestens zwei elektrische isolierte Leiterschienen aufweist, die durchgehend in der Kopplungsvorrichtung verlaufen. Ferner ist die Kopplungseinrichtung als Hohlschiene mit einer Öffnung entlang ihrer Längsrichtung ausgebildet und auf der Innenseite der Hohlschiene sind die Leiterschienen angeordnet.

Sind mindestens zwei Leiterschienen als Stromversorgungsleiterschienen und mindestens eine Leiterschiene als Datenübertragungsleiterschiene ausgebildet, kann die medizinische Versorgungseinheit mit der minimalen Anzahl an Leiterschienen kostengünstig hergestellt werden.

Sind in der Kopplungseinrichtung drei Stromversorgungsleiterschienen, die an eine Niederspannungsstromversorgung angepasst sind, und zwei Datenübertragungsleiterschienen vorgesehen, so ermöglicht dies den Anschluss herkömmlicher Netzgeräte mit den national üblichen Versorgungsspannungen sowie den Anschluss von Schutzkontaktsteckdosen, an die handelsübliche Schutzkontaktstecker anschließbar sind.

Beinhaltet die Kopplungseinrichtung einen Führungsabschnitt, vorzugsweise in Form zweier gegenüberliegender Führungsnuten, kann zum Einen eine Entlastung der Leiterschienen von mechanischer Belastung erreicht werden, sowie ein medizinischer Apparat oder anderer Stromabnehmer noch sicherer an der Kopplungseinrichtung ortsfest fixiert werden. Darüber hinaus kann beim Verschieben des medizinischen Apparats oder anderer Stromabnehmer entlang der Kopplungseinrichtung dieses Gerät sicher geführt werden und ein Verkanten in der Kopplungseinrichtung verhindert werden.

Ist entlang der Öffnung der Hohlschiene eine Abdeckvorrichtung vorzugsweise in Form einer oder zweier Lippen aus elastischem Material vorgesehen, die die Öffnung verengen oder verschließen, wird zum Einen ein ungewollter Kontakt mit den Stromversorgungsleiterschienen weiter erschwert, sowie ein effizienter Staub- und Spritzschutz bereitgestellt.

Durch die Trennung von Datenübertragungsleiterschienen und Stromversorgungsleiterschienen ist eine Datenübertragung selbst dann gewährleistet, wenn an die Stromversorgungsleiterschienen ein Stromverbraucher, von dem Störungen ausgesendet werden, angeschlossen ist, der ein Datenübertragungssignal verunreinigen würde.

Sind die Stromversorgungsleiterschienen und die Datenübertragungsleiterschienen so angeordnet, dass sie auf Innenflächen der Hohlschiene gegenüberliegen, lässt sich ein gegenseitiges induktives Einstören weiter unterdrücken.

Ist der Träger quaderförmig ausgestaltet und weist vier Langkanten, vier Langflächen und einen Innenraum auf, und erstreckt sich mindestens eine Kopplungseinrichtung entlang einer Langkante und ist mindestens eine der Langflächen des Trägers, die an die Langkante mit der Kopplungseinrichtung angrenzt, so ausgebildet, dass sie Modulbauteile in einem Baukastensystem aufnehmen kann, die austauschbar sind, so kann eine flexible medizinische Versorgungseinheit zur Stromversorgung und zur Anbringung unterschiedlichster medizinischer Geräte und anderer Vorrichtungen, wie Stromversorgern und Reglern oder Schaltern bereitgestellt werden.

Ist der Träger so ausgestaltet, dass sich mindestens zwei Kopplungseinrichtungen entlang einer Langkante erstreckt, eine von den Kopplungsvorrichtungen als eine innere Kopplungseinrichtung von dem Innenraum aus zugänglich ist und mindestens eine äußere Kopplungseinrichtung von außerhalb des Trägers zugänglich ist, so bleibt die Möglichkeit erhalten, dass an der äußeren Kopplungseinrichtung ein frei verschiebbarer Verbraucher angebracht wird, während auf der inneren Kopplungseinrichtung Modulbauteile angeschlossen sind. Die Versorgung der äußeren und inneren Kopplungseinrichtungen kann durch verschiedene Stromkreise erfolgen.

Weist die medizinische Versorgungseinheit eine Befestigungsvorrichtung, vorzugsweise in Form von Befestigungsnuten, zum Befestigen der Modulbauteile auf, ist es möglich, eine modular aufgebaute medizinische Versorgungseinheit beispielsweise zur Stromversorgung oder zum Halten von Reglern oder medizinischen Geräten bereitzustellen.

Verschiedene Baugruppen von medizinischen Versorgungseinheiten können als Träger ausgeführt sein. Bei der Integration der Kopplungseinrichtung z.B. in die Auslegerarme von Deckenstativen oder Schienensysteme von Deckenschienen können auch hier medizinische elektrische Geräte oder Systembauteile angebracht und versorgt werden.

Offenbart wird ebenfalls ein Systembauteil für den medizinischen Bereich, der ein Kopplungsstück aufweist, wobei das Kopplungsstück mindestens zwei voneinander isolierte Kontaktstücke und einen Isolierkörper, der die Kopplungsstücke voneinander elektrisch isoliert, beinhaltet. Dabei ist das Systembauteil daran angepasst, mit einer Kopplungseinrichtung gekoppelt zu werden, die als Hohlschiene mit innenliegenden Leiterschienen als Stromversorgungsleiterschienen und Datenübertragungsleiterschienen ausgebildet ist. Hierbei sind die Kontaktstücke so ausgebildet, dass sie im gekoppelten Zustand jeweils mit einer Leiterschiene einen leitenden Kontakt herstellen und entlang der Leiterschiene verschiebbar sind.

Werden drei Kontaktstücke vorgesehen, die als Stromversorgungskontaktstücke daran angepasst sind, mit den Stromversorgungsleiterschienen in Kontakt gebracht zu werden, und sind diese Kontaktstücke an eine Niederspannungsstromversorgung angepasst, können daran herkömmliche Netzgeräte angeschlossen werden.

Sind zwei Kontaktstücke vorgesehen, die als Datenübertragungskontaktstücke daran angepasst sind, mit den Datenübertragungsleiterschienen in Kontakt gebracht zu werden, kann das Systembauteil oder an dem Systembauteil angeschlossene Geräte über die Datenübertragungsleiterschienen eine Datenübertragung durchführen. Sind Stromversorgungsstücke und Datenübertragungsstücke zueinander disjunkt, wirken sich leitungsgebundene Störungen elektrischer Geräte nicht negativ auf die Datenübertragung aus.

Liegen die Stromversorgungskontaktstücke den Datenübertragungskontaktstücken bezüglich des Kopplungsstücks gegenüber, kann ein gegenseitiges Einstören weiter unterdrückt werden.

Weist das Systembauteil ein Führungsbauteil auf, das daran angepasst ist, in dem Führungsabschnitt geführt zu werden, ermöglicht dies, dass das Systembauteil entlang der Kopplungsvorrichtung sicher geführt werden kann und dass die Leiterschienen von einer mechanischen Belastung befreit werden.

Wird das Führungsbauteil in dem Führungsabschnitt durch eine Veränderung der Lage oder der Ausrichtung des Führungsbauteils das Systembauteils relativ zu dem Träger ortsfest fixiert, können auch Systembauteile mit größerem Eigengewicht oder höherer mechanischer Belastung, wie beispielsweise ein Griff zum Führen an dem Träger angebracht werden.

Ist das Systembauteil als ein Modulbauteil aufgebaut, dass dazu geeignet ist, baukastensystemartig in den Träger eingesetzt zu werden, und weist das Modulbauteil eine Frontfläche auf, die daran angepasst ist, in einem Zustand, in dem das Modulbauteil in den Träger eingesetzt ist, einen Teil der Langfläche zu bilden, ermöglicht dies einen modularen Aufbau eines Trägers zur Befestigung, Stromversorgung und Regelung von elektrischen Apparaten. In die Modulbauteile können auch Medienentnahmestellen für Flüssigkeiten oder medizinische Gase eingebaut werden.

Weist das Modulbauteil ein Befestigungsgegenstück auf, das daran angepasst ist, mit der Befestigungsvorrichtung das Modulbauteil relativ zu dem Träger ortsfest zu fixieren, vorzugsweise durch einen Haken, der mit der Befestigungsnut in Eingriff bringbar ist, ermöglicht dies ein modulares Anbringen und Entfernen von Modulbauteilen. Bei den Modulbauteilen kann es sich um solche handeln, die in der Frontfläche mindestens einen Schalter oder einen Regler aufweisen.

Über die Kopplungseinrichtung kann auch ein Systembauteil angebracht werden, über das eine Bremse der medizinischen Versorgungseinheit gelöst oder angezogen werden kann.

Über ein Fixierungsgegenstück auf der Rückseite der Hohlschiene, kann eine ortsfeste Fixierung weiter verbessert werden, insbesondere dann, wenn das Fixierungsgegenstück mit Vertiefungen oder Löchern ausgebildet ist, in die das Kopplungsstück in Eingriff gelangen kann.

Offenbart wird ebenfalls ein System aus der oben beschriebenen medizinische Versorgungseinheit und den oben beschriebenen Systembauteilen.

Die Erfindung wird anhand eines Ausführungsbeispiels unter Bezugnahme auf die begleitenden Figuren beschrieben.
- Figur 1: zeigt eine Schrägansicht eines Ausführungsbei- spiels der erfindungsgemäßen medizinischen Versorgungseinheit als Deckenstativ.
- Figur 2: zeigt einen quaderförmigen Träger des Ausfüh- rungsbeispiels.
- Figur 3: zeigt eine Schrägansicht eines Ausschnitts des Trägers.
- Figur 4: zeigt eine Draufsicht eines Ausschnitts des Trägers.
- Figur 5: zeigt eine Schrägansicht eines Handgriffs des Trägers.
- Figur 6: zeigt eine Schrägansicht eines Ausschnitts ei- nes Modulbauteils.
- Figur 7: zeigt eine Schrägansicht eines Ablagetischs des Trägers.

Im Folgenden wird der Gesamtaufbau eines Ausführungsbeispiels eines erfindungsgemäßen medizinischen Versorgungseinheit überblicksweise beschrieben.

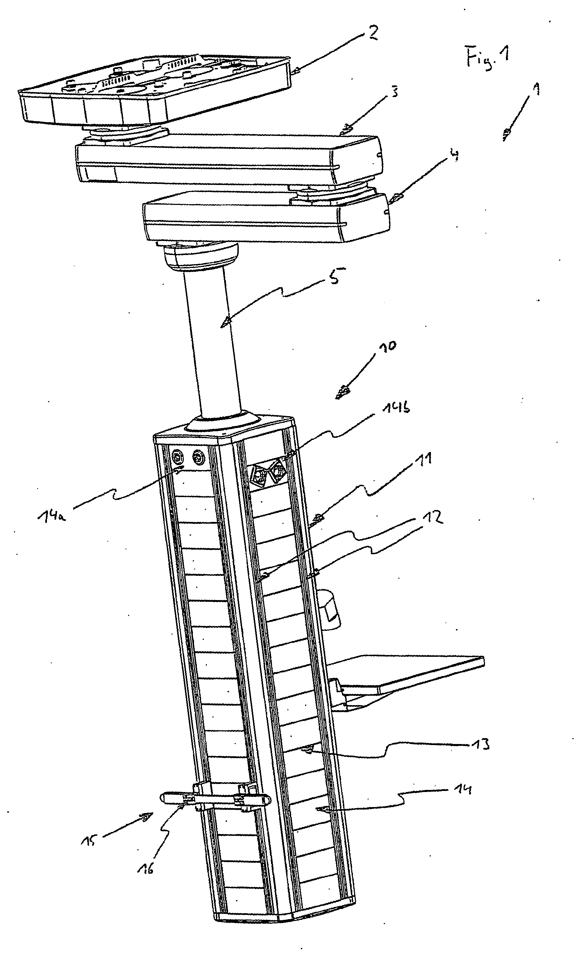

Figur 1 zeigt eine Schrägansicht einer medizinischen Versorgungseinheit 1. Die medizinische Versorgungseinheit 1 weist eine Deckenbefestigungsvorrichtung 2 auf, mit der die medizinische Versorgungseinheit an seinem Anbringungsort befestigt wird. Ein erster Auslegerarm 3 ist an einem seiner beiden Enden über eine Drehachse so mit der Deckenbefestigungsvorrichtung 2 verbunden, dass der erste Auslegerarm 3 relativ zu der Deckenbefestigungsvorrichtung 2 in einer horizontalen Richtung geschwenkt werden kann. Über einen nicht gezeigten ersten Bremsmechanismus kann die Ausrichtung zwischen der Deckenbefestigungsvorrichtung 2 und dem ersten Auslegerarm 3 fixiert werden und ein Schwenken unterbunden werden. Ein zweiter Auslegerarm 4 ist an einem seiner beiden Enden über eine Drehachse mit dem anderen Ende des ersten Auslegerarms 3 so verbunden, dass der zweite Auslegerarm 4 relativ zu dem ersten Auslegerarm 3 horizontal geschwenkt werden kann. Über einen nicht gezeigten zweiten Bremsmechanismus kann die Ausrichtung zwischen dem ersten Auslegerarm 3 und dem zweiten Auslegerarm 4 fixiert werden. An dem anderen Ende des zweiten Auslegerarms 4 ist eine Distanzsäule 5 so angeordnet, dass sie sich senkrecht zu dem zweiten Auslegerarm 4 bezüglich Figur 1 vertikal abwärts erstreckt. Die Distanzsäule 5 ist so an dem zweiten Auslegerarm 4 angebracht, dass sie um ihre Zentralachse gedreht werden kann. Über einen nicht gezeigten dritten Bremsmechanismus kann eine Drehausrichtung der Distanzsäule 5 relativ zu dem zweiten Auslegerarm 4 fixiert werden.

An dem unteren Ende der Distanzsäule 5 befindet sich ein quaderförmiger, langgestreckter Träger 10. Der Träger 10 weist vier Langkanten 11 auf. Entlang der Langkanten 11 erstrecken sich Kopplungseinrichtungen als Kopplungsschienen 12. Der Träger weist darüber hinaus vier Langflächen 13 auf, die in mehrere Modulbauteile 14 unterteilt sind. Dargestellt sind ein Modulbauteil 14a, das zwei Gasentnahmestellen beinhaltet, sowie ein Modulbauteil 14b, das zwei Schutzkontaktsteckdosen für eine national herkömmliche Niederspannungsstromversorgung aufweist. Ferner ist über zwei Kopplungseinrichtungen ein Systembauteil in Form eines Handgriffs 15 mit Betätigungsknöpfen 16 an dem Träger angebracht. Über die Betätigungsknöpfe 16 können die Bremsmechanismen zur Fixierung des ersten Auslegerarms 3, des zweiten Auslegerarms 4 und der Distanzsäule 5 gelöst und angezogen werden. Über den Handgriff 15 kann bei gelösten Bremsmechanismen die Lage des Trägers verändert werden.

Im Folgenden wird der Träger 10 beschrieben.

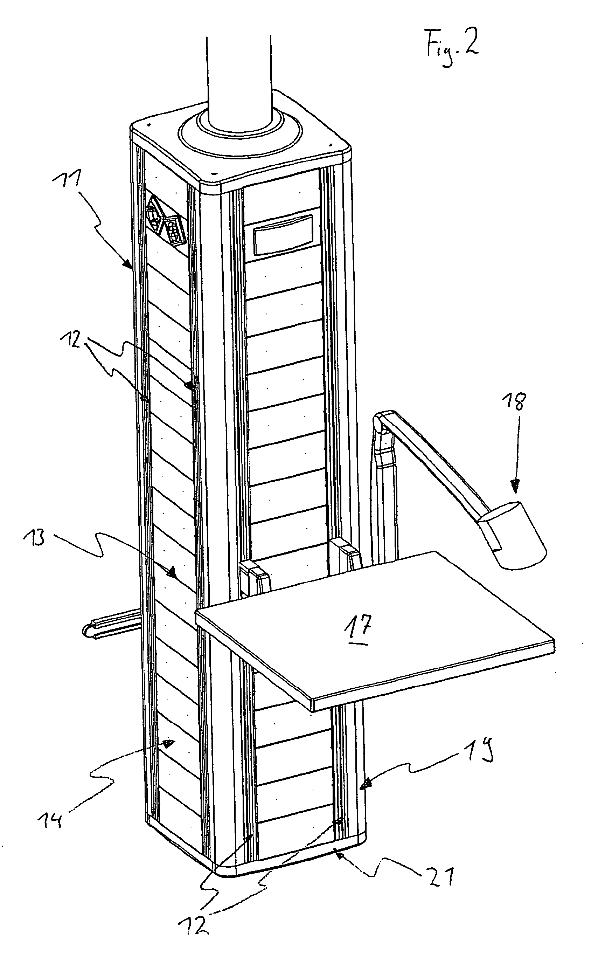

Figur 2 zeigt in einer Schrägansicht bezüglich Figur 1 die Rückseite des Trägers 10. Auf dieser Darstellung ist erkennbar, dass weitere Systembauteile in Form eines Ablagetischs 17 und einer Leuchte 18 über die Kopplungsschienen 12 an dem Träger angebracht sind. Darüber hinaus ist erkennbar, dass am Rand der Langflächen 13 jeweils zwei Kopplungsschienen 12 entlang der Langkanten 11 angeordnet sind. Die vier Langkanten 11 werden jeweils durch eine stranggepresste Profilschiene 19 aus Aluminium gebildet, die mit einer oberen Platte 20 und einer unteren Platte 21 durch Verschrauben derart miteinander verbunden sind, dass sie gemeinsam mit den Platten 20, 21 ein stabiles Gerüst in Quaderform bilden.

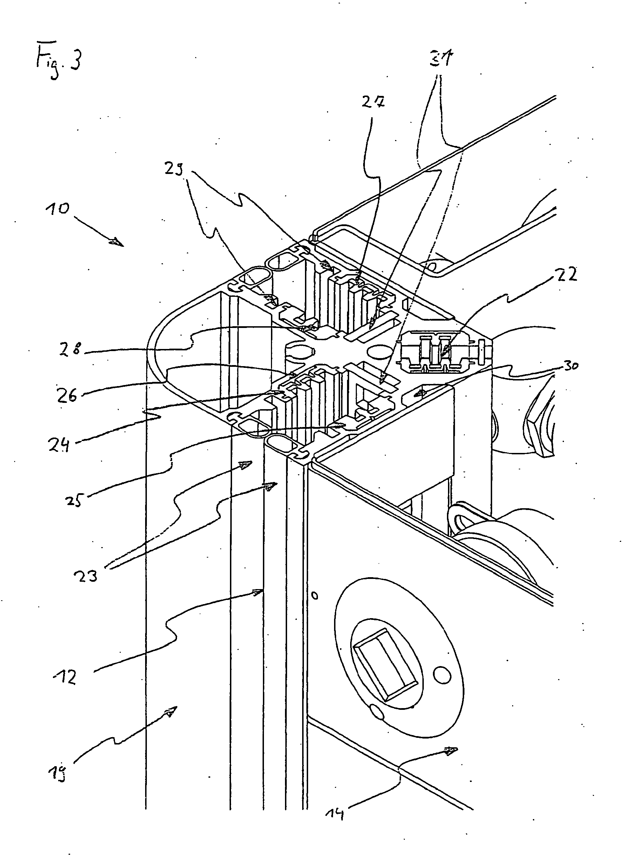

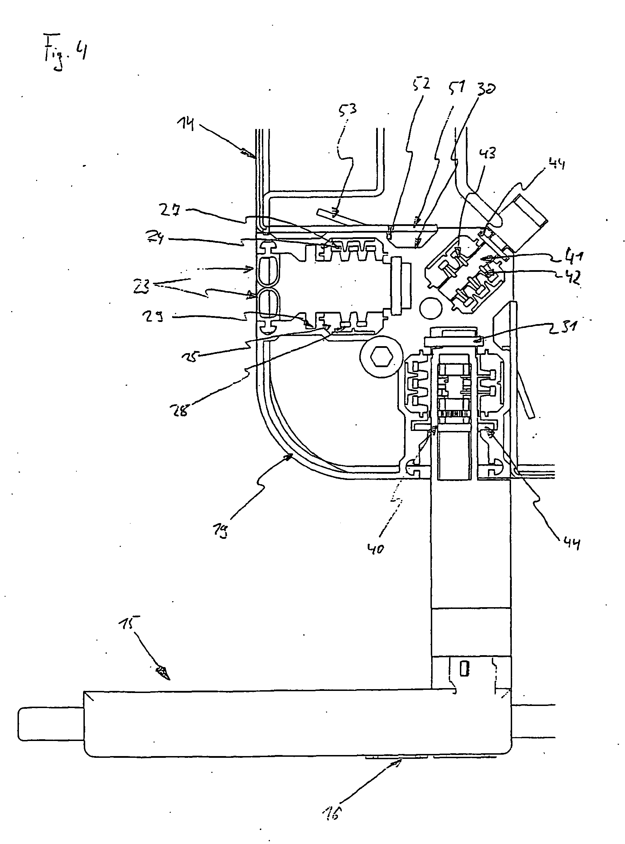

Figur 3 zeigt einen Ausschnitt aus Figur 2, der ein oberes Ende einer der Profilschienen 19 umfasst. Figur 4 zeigt den gleichen Ausschnitt in einer Draufsicht. Die Profilschiene 19 weist zwei Kopplungseinrichtungen in Form von außenliegenden Kopplungsschienen 12 auf und eine Kopplungseinrichtung in Form einer innenliegenden Kopplungsschiene 22 auf.

Im Folgenden werden die außenliegenden Kopplungsschienen 12 beschrieben.

Bei den Kopplungsschienen 12 handelt es sich um Hohlschienen, die in den Profilschienen 19 ausgebildet sind. Die Kopplungsschienen 12 weisen zur Außenseite des Trägers 10 eine Öffnung auf, die sich entlang der Profilschiene 19 als Spalt erstreckt.

Eine elastische Gummilippe 23 erstreckt sich jeweils entlang jeder Seite des Spalts soweit in Richtung zur Mitte des Spalts, so dass dieser Spalt durch die Gummilippen 23 verschlossen wird. So kann verhindert oder erschwert werden, dass Fremdkörper, Schmutz oder Flüssigkeiten in die Kopplungsschiene 12 gelangen, die dort einen Kurzschluss oder Schwergängigkeit verursachen können. Dadurch dass die Gummilippen 23 elastisch sind und darüber hinaus ein Hohlprofil aufweisen, können die Lippen 23 unter geringer Krafteinwirkung soweit geöffnet werden, dass ein später beschriebenes Kopplungsstück 40 hier hindurchragen kann.

Die Kopplungsschiene 12 weist auf zwei gegenüberliegenden Seiten einen ersten Isolierkörper 24 und einen zweiten Isolierkörper 25 auf. Die Isolierkörper 24, 25 sind jeweils in einer Unterbringungsnut 26, die sich in den zwei gegenüberliegenden Seiten der Kopplungsschiene 12 entlang der Längsrichtung der Kopplungsschiene 12 erstrecken, mittels Nut-und-Feder-Vorrichtungen befestigt. Die Isolierkörper 24, 25 sind im Profil kammartig aufgebaut. Entlang kammartig zurückliegenden Bereiche sind in dem Isolierkörper 24 Stromversorgungsleiterschienen 27 und in dem Isolierkörper 25 Datenübertragungsleiterschienen 28 angeordnet. Hierbei sind die drei Stromversorgungsleiterschienen 27 als Schutzleiter, als Nullleiter bzw. als Außenleiter vorgesehen, sowie zwei Datenübertragungsleiterschienen 28. Auf den Stromversorgungsleiterschienen 27 liegt die national übliche 50Hz Wechselspannung mit 230V an.

Die Datenübertragungsleiterschienen 28 stellen eine EIA-485-Bus-konforme Schnittstelle zur Datenübermittlung bereit.

Als Führungsabschnitt sind in der Kopplungsschiene 12 zwei Führungsnuten 29 vorgesehen, die sich zwischen dem ersten Isolierkörper 24 bzw. dem zweiten Isolierkörper 25 und den Lippen 23 entlang jeder der gegenüberliegenden Seiten der Kopplungsschiene 12 erstrecken. Die Führungsnuten 29 dienen dazu, ein später beschriebenes Führungsbauteil 44 aufzunehmen.

An der Seite, die der Öffnung der Kopplungsschiene 12 gegenüberliegt, ist als Fixierungsgegenstück eine Positionierschiene 31 aus Stahl in zwei Nuten eingeführt vorgesehen. Die Positionierschiene 31 weist ungefähr die gleiche Länge wie und eine etwas geringere Breite als die Kopplungsschiene 12 auf. Die Tiefe der Positionierschiene 31 beträgt einen Bruchteil deren Breite. In ihrer Breitefläche weist die Positionierschiene 31 eine Vielzahl rechteckiger Stanzlöcher auf, die sich in regelmäßigen Abständen entlang ihrer Längsrichtung erstrecken. Die Positionierschiene 31 dient einer Fixierung und Positionierung eines später beschriebenen Systembauteils 15, 17.

Die innenliegende Kopplungsschiene 22 ist grundsätzlich gleich aufgebaut wie die Kopplungsschiene 12, allerdings sind keine Gummilippen 23 und keine Positionierschiene 31 vorhanden und die Führungsnuten 29 sind kleiner ausgebildet.

Wie den Figuren 3 und 4 entnehmbar, grenzen an die Profilschienen 19 die später im Detail beschriebenen Modulbauteile 14 an. Zur Befestigung der Modulbauteile 14 ist zwischen den Kopplungsschienen 12 und der Kopplungsschiene 22 jeweils eine Befestigungsvorrichtung in Form einer Befestigungsnut 30 in der Profilschiene 19 vorgesehen.

Im Folgenden werden Systembauteile und Modulbauteile beschrieben.

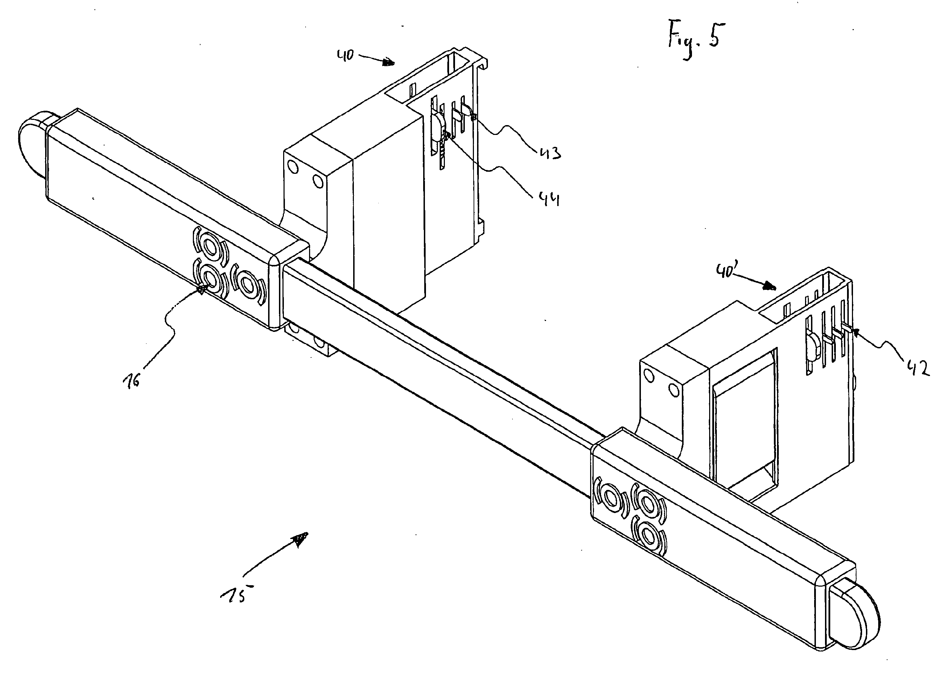

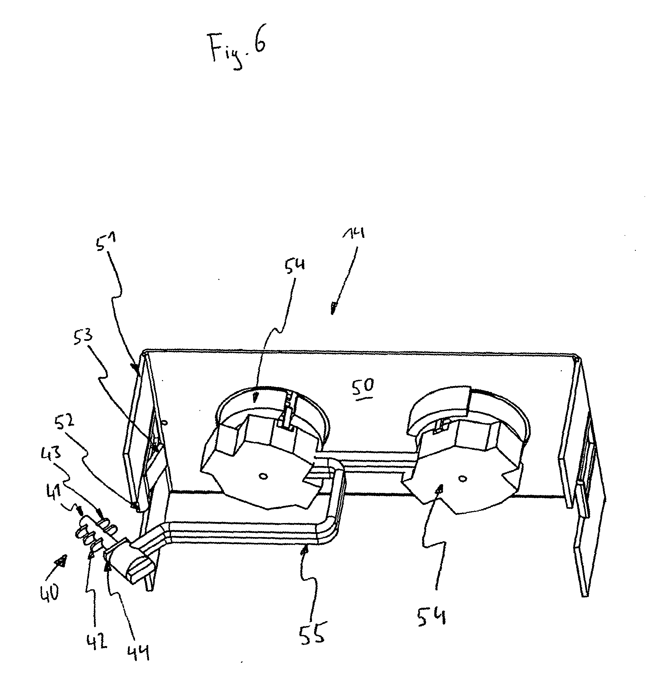

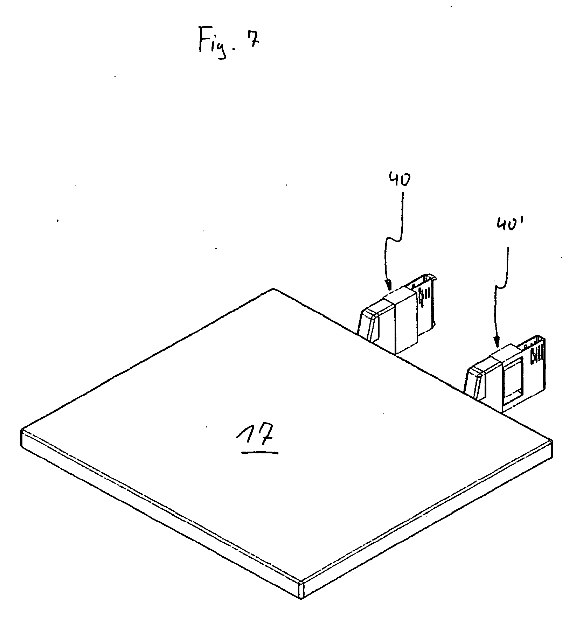

Ein Systembauteil, wie beispielsweise ein in Figur 5 gezeigter Handgriff 15, in Figur 7 gezeigter Ablagetisch 17 oder in Figur 6 gezeigtes Modulbauteil 14, zeichnet sich dadurch aus, dass es ein Kopplungsstück 40 aufweist, das dazu geeignet ist, mit einer Kopplungsschiene 12 oder 22 verschiebbar gekoppelt zu werden. Das Kopplungsstück besteht aus einem Kopplungsstückisolierkörper 41, der so bemessen ist, dass er sich innerhalb der Kopplungsschiene 12, 22 frei bewegen kann. An dem Kopplungsstückisolierkörper 41 befinden sich Kontaktstücke in Form von drei Stromversorgungskontaktstücken 42 und zwei Datenübertragungskontaktstücken 43. Diese sind so ausgestaltet, dass sie mit den Stromversorgungsleiterschienen 27 und den Datenübertragungsleiterschienen 28 in Kontakt bleiben, wenn das Kopplungsstück in der Kopplungsschiene 12, 22 verschoben wird. Darüber hinaus verfügt das Kopplungsstück über ein Führungsbauteil 44, das in diesem Ausführungsbeispiel quaderförmig oder abgerundet-quaderförmig ausgestaltet ist und entlang der Führungsnuten 29 in dieser verschoben werden kann. Das Führungsbauteil 44 dient dazu, dass wenn beim Verschieben des Kopplungsstücks 40 in der Kopplungsschiene 12, 22 auf das Kopplungsstück 40 eine mechanische Belastung aufgebracht wird, diese über das Führungsbauteil 44 und die Führungsnuten 29 aufgefangen wird und so die Leiterschienen 27, 28 in diesem Fall mechanisch entlastet bleiben.
Die Stromversorgungskontaktstücke 42 und die Datenübertragungskontaktstücke 43 sind gegenüber im Kopplungsstückisolierkörper 41 angeordnet und das Führungsbauteil 44 am Kopplungsstückisolierkörper 41 besitzt zwei gegenüberliegende Sektoren mit geringerem Durchmesser, die zu den Kontaktstücken 42, 43 um 90° verdreht angeordnet sind. Bei einem Ausrichten des Kopplungsstückisolierkörpers 41, so dass die Kontaktstücke 42, 43 und die Sektoren des Führungsbauteils 44 mit größerem Durchmesser parallel zur Längsrichtung der Kopplungsschiene 12 stehen, ist es möglich das Kopplungsstück 40 bis zum Anschlag an der der Öffnung der Kopplungsschiene 12 gegenüberliegenden Wand einzuführen. Durch Verdrehen des Kopplungsstückisolierkörpers 41 mit den Kontaktstücken 42, 43 und dem Führungsbauteil 44 um 90° wird der Kontakt zwischen den Kontaktstücken 42, 43 und den Leiterschienen 27, 28 geschlossen und das Kopplungsstück 40 mit Hilfe des Führungsbauteils 44 in der Führungsnut 29 formschlüssig verriegelt. Darüber hinaus kann das Führungsbauteil 44 durch Verschrauben gegenüber dem Kopplungsstück 40 versetzt werden, so dass sich das Kopplungsstück 40 auf der Rückseite der Kopplungsschiene 12, 22 oder der Positionierschiene 31 abstützt und das Führungsbauteil 44 gegen eine Seite der Führungsnuten 29 gepresst wird. Durch den so erzeugten Reibschluss wird das Kopplungsstück 40 in seiner Position in der Kopplungsschiene 12, 22 fixiert. Alternativ zu dem Reibschluss kann durch eine entsprechende Profilierung der Führungsnuten 29 eine Fixierung durch einen Formschluss erfolgen. Auch kann ein Formschluss dadurch erreicht werden, dass das Kopplungsstück 40 so gestaltet ist, dass es nach dem Fixieren mindestens teilweise in die Stanzlöcher der Positionierschiene 31 hineinragt.

In Figuren 4 und 5 ist beispielhaft als Systembauteil der Handgriff 15 mit den Schaltknöpfen 16 dargestellt. Da dieser keine Stromversorgung benötigt, oder diese Stromversorgung über ein in Figur 5 gezeigtes weiteres Kopplungsstück 40' erfolgen kann, weist in diesem Fall das Kopplungsstück 40 keine Stromversorgungskontaktstücke 42, sondern lediglich Datenübertragungskontaktstücke 43 auf. Bei Betätigung der Schaltknöpfe 16 wird ein entsprechendes Datenübertragungssignal über die Datenübertragungskontaktstücke 43 auf die Datenübertragungsleiterschienen 28 übertragen. An die Datenübertragungsleiterschienen 28 ist ebenfalls ein nicht gezeigtes Steuergerät angeschlossen, das die Bremsmechanismen des ersten Auslegerarms 3, des zweiten Auslegerarms 4 und der Distanzsäule 5 betätigt. Wird von diesem Steuergerät ein entsprechendes Steuersignal über die Datenübertragungsleiterschienen 28 empfangen, werden die Bremsmechanismen gelöst bzw. angezogen, so dass zwischen einem fixierten Zustand und einem beweglichen Zustand des Trägers 10 umgeschaltet werden kann.

Im Folgenden wird das in Fig. 6 dargestellte Modulbauteil 14 beschrieben.

Bei dem Modulbauteil 14 handelt es sich um ein Systembauteil mit Kopplungsstück 40, das darüber hinaus darauf ausgelegt ist, in eine der Langflächen 13 des Trägers 10 als Modul eingesetzt zu werden (vgl. Figur 1).

Das Modulbauteil 14 weist eine rechteckige Frontfläche 50 mit zwei langen und zwei kurzen Kanten auf, die so gestaltet ist, dass sie einen Teil einer Langfläche 13 des Trägers 10 bilden kann. An ihren kurzen Kanten erstrecken sich Halteflächen 51 senkrecht zu der Frontfläche 50, so dass diese gemeinsam mit der Frontfläche 50 eine U-Form bilden. In den Halteflächen 51 ist jeweils ein Befestigungsgegenstück in Form eines Befestigungshakens 52 ausgebildet. Dieser ist so ausgestaltet, dass er mit der Befestigungsnut 30 in Eingriff bringbar ist (vgl. Figur 3) und so das Modulbauteil 14 gegen ein Herausfallen aus dem Träger 10 sichert. Ein ungewollt weites Hineinragen des Modulbauteils 14 in den Träger 10 wird dadurch verhindert, dass Hinterkanten der Halteflächen 51 so gestaltet sind, dass sie gegen eine Rückseite der Befestigungsnut 30 anliegen. Über einen Hebel 53 kann mittels elastischer Verformung des Befestigungshakens 52 der Eingriff zwischen dem Befestigungshaken 52 und der Befestigungsnuten 30 aufgehoben werden und das Modulbauteil 14 aus dem Träger 10 entfernt werden. In der Frontfläche 50 sind zwei Schutzkontaktsteckdosen 54 vorgesehen, es handelt sich also bei dem dargestellten Modulbauteil um ein Steckdosenmodulbauteil 14b aus Figur 1. Die Schutzkontaktsteckdosen sind mit Verbindungsleitungen 55 mit dem Kopplungsstück 40 verbunden und werden über dieses durch die drei Stromversorgungsleiterschienen 27 mit Strom versorgt.

Alternativ zu den Schutzkontaktbuchsen 54 können in der Frontfläche 50 auch hier nicht gezeigte Schalter oder Regler angebracht sein. Diese werden dann über die Verbindungsleitungen 55 nicht mit den Stromversorgungsleiterschienen 27, sondern mit den Datenübertragungsleiterschienen 28 verbunden und können Geräte, die ebenfalls Kontakt zu den Datenübertragungsleiterschienen 28 haben und auf entsprechende Signale reagieren, regeln und schalten.

Dem Fachmann ist offensichtlich, dass innerhalb der Erfindung Abweichungen von dem Ausführungsbeispiel möglich sind. So können als Modulbauteile nicht nur Steckdosen, Schalter und Regler verwendet werden, sondern medizinische Geräte wie Infusionssteuerungen oder dergleichen eingesetzt werden, die sowohl über die Stromversorgungsleiterschienen mit Energie versorgt werden als auch über die Datenübertragungsleiterschienen gesteuert werden.

Des Weiteren können statt elektrischer Bauteile auch Entnahmestellen für Fluide, z.B. medizinische Gase, wie in Modulbauteil 14a gezeigt, darin eingebaut werden.

Darüber hinaus ist es möglich, die Modulbauteile 14 mit dem Träger 10 nicht über den beschriebenen Mechanismus von Nuten 30 und Haken 52 zu befestigen, sondern beispielsweise durch Verschrauben oder durch Einklemmen.

In der Figur 7 ist beispielhaft als Systembauteil ein Ablagetisch 17 dargestellt.

Bei dem Ablagetisch 17 handelt es sich um ein Biegeteil aus Stahlblech, das zwei Kopplungsstücke 40, 40' aufweist, die dazu geeignet sind, mit einer Kopplungsschiene 12 verschiebbar gekoppelt zu werden. Da in dem Ablagetisch 17 keine elektrischen Komponenten enthalten sind, befinden sich an dem Kopplungsstücken 40 keine Kontaktstücke 42, 43. Das Kopplungsstück 40 ist so gestaltet, dass es nach dem Fixieren mindestens teilweise in die Stanzlöcher der Positionierschiene 31 hineinragt und somit die Vertikalkräfte überträgt.

Der Ablagetisch kann optional auch mit elektrischen Einrichtungen, wie z.B. Schutzkontaktsteckdosen oder Schalter ausgerüstet werden. Zur Versorgung sind dann in die Kopplungsstücke 40 die notwendigen Kontaktstücke 42, 43 eingebaut.

Die medizinische Versorgungseinheit kann zur Kostenreduzierung mit weniger als den beschriebenen beweglichen Bauteilen ausgebildet sein oder zur Erhöhung der Mobilität weitere Freiheitsgrade aufweisen, beispielsweise eine Verdrehbarkeit um eine Längsachse einer der Auslegerarme 3 und 4.

Obwohl das Material der Gummilippen 23 elastisch ist, ergeben sich auf Grund dessen Reststeifigkeit Öffnungen direkt ober- und unterhalb von Kopplungsstücken 40, die durch die Gummilippen 23 durchtreten. Diese Öffnungen können wiederum durch Abdecklaschen, die an der Ober- und Unterseite der Kopplungsstücke 40 angebracht sind, verschlossen werden.

Alternativ zu den Gummilippen 23 können andere Abdeckmittel wie beispielsweise Bürsten oder bewegliche Abdeckblenden verwendet werden. Hierbei sind Bürsten vorteilhaft, um die Verschiebbarkeit des Kontaktstückes 40 zu erleichtern und bewegliche Abdeckplatten sind vorteilhaft, da sie in einem Zustand, in welchem die Kontaktschiene 12 nicht benötigt wird, einen noch sichereren Schutz gegen Eindringen in die Hohlschiene bieten.

Je nach Festigkeitsanforderungen können für die Profilschiene 19 anstelle von Aluminium andere Metalle oder Kunststoff verwendet werden.

Auf separate Datenübertragungsleiterschienen kann verzichtet werden, wenn die Datenübermittlung gleichzeitig mit der Stromversorgung über die Stromversorgungsleiterschienen abgewickelt wird, was zu Kosteneinsparungen und zur Vereinfachung des Koppelungsmechanismus' führt.

## Patentansprüche

1. Medizinische Versorgungseinheit für den medizinischen Bereich, aufweisend einen langgestreckten Träger (10), wobei
die medizinische Versorgungseinheit eine Kopplungseinrichtung (12, 22) aufweist,
die Kopplungseinrichtung (12, 22)
sich entlang des Trägers (10) erstreckt und
mindestens zwei elektrisch isolierte Leiterschienen (27, 28), die durchgehend in der Kopplungsvorrichtung (12) verlaufen, aufweist,
die Kopplungseinrichtung (12, 20) als Hohlschiene mit einer Öffnung entlang ihrer Längsrichtung ausgebildet ist, und
die Leiterschienen auf der Innenseite der Hohlschiene angeordnet sind.

2. Medizinische Versorgungseinheit nach Anspruch 1, wobei
mindestens zwei Leiterschienen, vorzugsweise drei Leiterschienen, als Stromversorgungsleiterschienen (27) ausgebildet sind,
mindestens eine Leiterschiene, vorzugsweise zwei Leiterschienen, als Datenübertragungsleiterschiene (28) ausgebildet ist.

3. Medizinische Versorgungseinheit nach einem der Ansprüche 1 oder 2, wobei
die Kopplungseinrichtung einen Führungsabschnitt, insbesondere eine Führungsnut, beinhaltet, der sich entlang der Kopplungseinrichtung erstreckt.

4. Medizinische Versorgungseinheit nach einem der Ansprüche 1 bis 3, wobei entlang der Öffnung eine Abdeckvorrichtung (23), vorzugsweise eine Lippe aus elastischem Material, die die Öffnung verengt oder verschließt, vorgesehen ist.

5. Medizinische Versorgungseinheit nach einem der Ansprüche 1 bis 4, wobei
der Träger (10) quaderförmig ausgestaltet ist, vier Langkanten (11), vier Langflächen (13) und einen Innenraum aufweist,
sich die mindestens eine Kopplungseinrichtung (12, 22) entlang einer Langkante (11) erstreckt und
mindestens eine der Langflächen (13) des Trägers, die an die Langkante (11) mit der Kopplungseinrichtung (12, 22) angrenzt, so ausgebildet ist, dass sie Modulbauteile (14) in einem Baukastensystem aufnehmen kann, die daran angepasst ist, austauschbar zu sein.

6. Medizinische Versorgungseinheit nach Anspruch 5, wobei
sich mindestens zwei Kopplungseinrichtungen (12, 22) entlang einer Langkante (11) erstrecken,
von denen eine innere Kopplungseinrichtung (22) vom Innenraum zugänglich ist und
mindestens eine äußere Kopplungseinrichtung (12) von außerhalb des Trägers zugänglich ist.

7. Medizinische Versorgungseinheit nach einem der Ansprüche 5 oder 6, wobei der Träger eine Befestigungsvorrichtung (30), vorzugsweise eine Befestigungsnut, zum Befestigen mindestens eines Modulbauteils (14) aufweist.

8. Systembauteil zur Verwendung mit einem medizinische Versorgungseinheit nach einem der Ansprüche 1 bis 7, aufweisend ein Kopplungsstück (40), wobei
das Kopplungsstück (40)
mindestens zwei voneinander isolierte Kontaktstücke (42, 43) beinhaltet,
einen Isolierkörper (41) beinhaltet, der die Kontaktstücke voneinander elektrisch isoliert, und
daran angepasst ist, mit einer Kopplungseinrichtung (12, 22) gekoppelt zu werden, und
die Kontaktstücke (42, 43) in einem Zustand, in dem das Kopplungsstück (40) mit der Kopplungseinrichtung (12, 22) gekoppelt ist, mit Leiterschienen (27, 28) einen leitenden Kontakt herstellen und entlang der Leiterschienen (27, 28) verschiebbar sind.

9. Systembauteil nach Anspruch 8, wobei
drei Kontaktstücke vorgesehen sind, die als Stromversorgungskontaktstücke (42) daran angepasst sind, mit den Stromversorgungsleiterschienen (27) in Kontakt gebracht zu werden und an eine Niederspannungsstromversorgung angepasst sind,
zwei Kontaktstücke vorgesehen sind, die als Datenübertragungskontaktstücke (43), die vorzugsweise gegenüberliegen, daran angepasst sind, mit den Datenübertragungsleiterschienen (28) in Kontakt gebracht zu werden,
und ein Führungsbauteil (44) vorgesehen ist, das daran angepasst ist, in einem in der Kopplungseinrichtung (12, 22) angeordneten Führungsabschnitt (29) geführt zu werden.

10. Systembauteil nach Anspruch 9, wobei das Führungsbauteil (44) und der Führungsabschnitt (29) so ausgebildet sind, dass durch eine Veränderung der Lage oder der Ausrichtung richtung des Führungsbauteils (44) das Kopplungsstück (40) relativ zu der Kopplungseinrichtung (12, 22) ortsfest fixiert wird.

11. Systembauteil nach einem der Ansprüche 8 bis 10 in Form eines Modulbauteils (14) zur Verwendung in einer medizinische Versorgungseinheit nach einem der Ansprüche 5 bis 7, das dazu geeignet ist, in den Träger (10) in einem Baukastensystem eingesetzt zu werden, das Modulbauteil aufweisend:
eine Frontfläche (50), die daran angepasst ist, in einem Zustand, in dem das Modulbauteil (14) in dem Träger eingesetzt ist, einen Teil der Langfläche (13) zu bilden.

12. Modulbauteil (14) nach Anspruch 11, aufweisend ein Befestigungsgegenstück (52), insbesondere einen Haken, das daran angepasst ist, mit der Befestigungsvorrichtung in Eingriff zu gelangen und das Modulbauteil (14) relativ zu dem Träger ortsfest zu fixieren.

13. Modulbauteil nach einem der Ansprüche 11 oder 12, wobei die Frontfläche (50) mindestens eine Steckbuchse (54) zur Niederspannungsstromversorgung aufweist.

14. System, bestehend aus einer medizinische Versorgungseinheit nach einem der Ansprüche 1 bis 7 und einem Systembauteil nach einem der Ansprüche 8 bis 13.

15. System nach dem vorhergehenden Anspruch, wobei die Kopplungseinrichtung (12) mit einem Fixierungsgegenstück (31) versehen ist, das so ausgestaltet ist, dass es mit dem Kopplungsstück (40) in Eingriff gelangen kann.

## Claims

1. Medical supply unit for the medical field comprising an elongated carrier (10), wherein
the medical supply unit comprises a coupling device (12, 22) and
the coupling device (12, 22) extends along the carrier (10) and
it comprises at least two electrically isolated conducting rails (27, 28) which continuously extend in the coupling device (12),
the coupling device (12, 20) is formed as to be a hollow rail having an opening which is formed along its longitudinal direction, and
the conducting rails are arranged at the internal side of the hollow rail.

2. Medical supply unit according to claim 1, wherein
at least two conducting rails, preferably three conducting rails, are formed as to be power supply conducting rails (27),
at least one conducting rail, preferably two conducting rails, is formed as to be a data transmission conducting rail (28).

3. Medical supply unit according to any of claims 1 or 2, wherein
the coupling device comprises a guide section, particularly a guide groove, which extends along the coupling device.

4. Medical supply unit according to any of claims 1 to 3, wherein
a cover device (23), preferably a lip made of an elastic material, is provided along the opening, which narrows or closes the opening.

5. Medical supply unit according to any of claims 1 to 4, wherein
the carrier (10) is formed cuboid-like and the carrier (10) comprises four longitudinal-edges (11), four longitudinal-faces (13) and an internal space,
at least one coupling device (12, 22) extends along one longitudinal-edge (11) and
at least one of the longitudinal-faces (13) of the carrier abutting on the longitudinal-edge (11) having the coupling device (12, 22), is formed such that the longitudinal-face is able to accommodate module elements (14) in a modular system, which module elements are adapted to be exchangeable.

6. Medical supply unit according to claim 5, wherein
at least two coupling devices (12, 22) extend along one longitudinal-edge (11),
one internal coupling device (22) of those is accessible from the internal space, and
at least one external coupling device (12) is accessible from outside of the carrier.

7. Medical supply unit according to any of claims 5 or 6, wherein
the carrier comprises a fixing device (30), preferably a fixing groove, for fixing at least one module element (14).

8. System element for use in a medical supply unit according to any of claims 1 to 7, comprising
a coupling piece (40), wherein
the coupling piece (40) includes at least two contact pieces (42, 43) which are insulated from each other,
it comprises an insulating body (41) which electrically insulates the contact pieces from each other, and
it is adapted to be coupled to a coupling device (12, 22), and
the contact pieces (42, 43) establish a conducting contact with the conducting rails (27, 28) and they are shiftable along the conducting rails (27, 28) in a state in which the coupling piece (40) is coupled with the coupling device (12, 22).

9. System element according to claim 8, wherein
three contact pieces are provided, which, as to be power supply contact pieces (42), are adapted to be brought into contact with the power supply conducting rails (27), and which are adapted to a low voltage power supply,
two contact pieces are provided as to be data transmission contact pieces (43) which preferably are oppositely located to be brought into contact with the data transmission conducting rails (28), and
a guide element (44) is provided which is adapted to be guided in a guide section (29) which is arranged in the coupling device (12, 22).

10. System element according to claim 9, wherein
the guide element (44) und the guide section (29) are formed such that by changing the location or the orientation of the guide element (44) the coupling element (40) is immovably fixed relative to the coupling device (12, 22).

11. System element according to any of claims 8 to 10, formed as to be a module element (14) for use in a medical supply unit according to any of claims 5 to 7, which is suitable as to be inserted into the carrier (10) in a modular system, the module element comprising:
a front face (50) which is adapted to form a part of the longitudinal-face (13) in a state in which the module element (14) is inserted into the carrier.

12. Module element (14) according to claim 11, comprising a fixation counter piece (52), particularly a hook, which is adapted to be engaged with the fixing device and which is adapted to immovably fix the module element (14) relative to the carrier.

13. Module element according to any of claims 11 or 12, wherein
the front face (50) comprises at least one socket (54) for a low voltage power supply.

14. System, consisting of a medical supply unit according to any of claims 1 to 7 and a system element according to any of claims 8 to 13.

15. System according to the preceding claim, wherein the coupling device (12) is provided with a fixation counter part (31) which is formed such that it is able to engage with the coupling piece (40).

## Revendications

1. Unité d'alimentation médicale pour le domaine médical, présentant un support (10) allongé,
où
l'unité d'alimentation médicale présente un dispositif de couplage (12, 22),
le dispositif de couplage (12, 22)
s'étend le long du support (10) et
présente au moins deux rails conducteurs (27, 28) isolés électriquement, s'étendant de manière continue dans le dispositif de couplage (12),
le dispositif de couplage (12, 22) est réalisé sous forme de rail creux, avec une ouverture le long de sa direction longitudinale, et
les rails conducteurs sont disposés sur le côté intérieur du rail creux.

2. Unité d'alimentation médicale selon la revendication 1, où
au moins deux rails conducteurs, de préférence trois rails conducteurs, sont réalisés sous forme de rails conducteur d'alimentations en courant électrique (27),
au moins un rail conducteur, de préférence deux rails conducteurs, est réalisé sous forme de rail conducteur de transmission de données (28).

3. Unité d'alimentation médicale selon l'une des revendications 1 ou 2, où
le dispositif de couplage contient un tronçon de guidage, en particulier une rainure de guidage, s'étendant le long du dispositif de couplage.

4. Unité d'alimentation médicale selon l'une des revendications 1 à 3, où le long de l'ouverture est prévu un dispositif de recouvrement (23), de préférence une lèvre en matériau élastique, rétrécissant ou obturant l'ouverture.

5. Unité d'alimentation médicale selon l'une des revendications 1 à 4, où
le support (10) est de configuration parallélépipédique, présente quatre arêtes longitudinale (11), quatre faces longitudinales (13) et un espace intérieur,
le au moins un dispositif de couplage (12, 22) s'étend le long d'une arête longitudinale (11), et
au moins l'une des faces longitudinales (13) du support, limitrophe à l'arête longitudinale (11) avec le dispositif de couplage (12, 22), est réalisée de manière qu'elle puisse recevoir des composants modulaires (14) dans un système selon le principe des jeux de construction, lui étant adapté pour être interchangeable.

6. Unité d'alimentation médicale selon la revendication 5, où
au moins deux dispositifs de couplage (12, 22) s'étendent le long d'une arête longitudinale (11),
dont un dispositif de couplage intérieur (22) est accessible depuis l'espace intérieur, et
au moins un dispositif de couplage extérieur (12) est accessible depuis l'extérieur du support.

7. Unité d'alimentation médicale selon l'une des revendications 5 ou 6, **caractérisée en ce que** le support présentant un dispositif de fixation (30), de préférence une rainure de fixation, pour fixer au moins un composant modulaire (14).

8. Composant de système, pour utilisation avec une unité d'alimentation médicale selon l'une des revendications 1 à 7, présentant une pièce d'accouplement (40), où
la pièce d'accouplement (40)
contient au moins deux pièces de contact (42, 43) isolées l'une de l'autre,
contient un corps isolant (41), isolant électriquement l'une de l'autre les pièces de contact, et
est adaptée pour être couplée à un dispositif de couplage (12, 22), et
les pièces de contact (42, 43), en un état dans lequel la pièce d'accouplement (40) est couplée au dispositif de couplage (12, 22), établissent un contact conducteur avec des rails conducteurs (27, 28) et sont déplaçables le long des rails conducteurs (27, 28).

9. Composant de système selon la revendication 8, où
sont prévus trois pièces de contact, adaptées en tant que pièces de contact pour alimentation en courant électrique (42), pour être placées en contact avec les rails conducteurs d'alimentation en courant électrique (27) et adaptées à une alimentation en courant électrique basse tension,
sont prévues deux pièces de contact, adaptées, en tant que pièces de contact de transmission de données (43), placées de préférence à l'opposé, pour être placées en contact avec les rails conducteurs de transmission de données (28),
et est prévu un composant de guidage (44), adapté pour être guidé dans un tronçon de guidage (29) disposé dans le dispositif de couplage (12, 22).

10. Composant de système selon la revendication 9, le composant de guidage (44) et le tronçon de guidage (29) étant réalisés de manière que, par une modification de la position ou de l'orientation du composant de guidage (44), la pièce de couplage (40) soit fixée de manière localement fixe au dispositif de couplage (12, 22).

11. Composant de système selon l'une des revendications 8 à 10, sous la forme d'une composant modulaire (14), pour utilisation dans une unité d'alimentation médicale selon l'une des revendications 5 à 7, convenant pour être inséré dans le support (10), dans un système selon le principe des jeux de construction,
le composant modulaire présentant :
une face avant (50), adaptée pour, dans un état dans lequel le composant modulaire (14) est inséré dans le support, former une partie de la face longitudinale (13).

12. Composant modulaire (14) selon la revendication 11, présentant une pièce conjuguée de fixation (52), en particulier un crochet, adapté pour venir en prise avec le dispositif de fixation et fixer de manière localement fixe le composant modulaire (14) par rapport au support.

13. Composant modulaire selon l'une des revendications 11 ou 12, la face avant (50) présentant au moins une douille à embrochage (54) pour l'alimentation en courant électrique basse tension.

14. Système composé d'une unité d'alimentation médicale selon l'une des revendications 1 à 7 et d'un composant de système selon l'une des revendications 8 à 13.

15. Système selon l'une des revendications précédentes, le dispositif de couplage (12) étant muni d'une pièce conjuguée de fixation (31), configurée de manière à venir en prise avec la pièce de couplage (40).
